# EUROPEAN PATENT SPECIFICATION

(11) **EP 2 031 274 B1**
(45) Date of publication and mention of the grant of the patent: **04.07.2012**
(21) Application number: 07830461.5
(22) Date of filing: 24.10.2007
(51) Int. Cl.: F16H 9/12, C21D 1/06, C21D 1/10, C21D 9/00, F16H 55/56

(54) **SHEAVE MEMBER FOR BELT CONTINUOUSLY VARIABLE TRANSMISSIONS AND METHOD OF MANUFACTURING IT**
SCHEIBENTEIL FÜR STUFENLOSE RIEMENGETRIEBE UND HERSTELLUNGSVERFAHREN DAFÜR
ELÉMENT DE GALET POUR DES TRANSMISSIONS À COURROIE CONTINUELLEMENT VARIABLES ET SON PROCÉDÉ DE FABRICATION

(30) Priority: 26.10.2006 JP 2006290678
(43) Date of publication of application: 04.03.2009
(73) Proprietor: Aisin AW Co., Ltd., Fujii-cho Anjo-shi Aichi 444-1192 (JP)
(72) Inventor: OHBAYASHI, Kouji c/o AISIN AW CO., LTD., Anjo-shi Aichi 444-1192 (JP); OKADA, Kazuaki c/o AISIN AW CO., LTD., Anjo-shi Aichi 444-1192 (JP); MATSUKAWA, Taro c/o AISIN AW CO., LTD., Anjo-shi Aichi 444-1192 (JP); ETO, Yutaka c/o AISIN AW CO., LTD., Anjo-shi Aichi 444-1192 (JP); MIZUNO, Koki c/o AISIN AW CO., LTD., Anjo-shi Aichi 444-1192 (JP); TSUKUDA, Kazumichi c/o AISIN AW CO., LTD., Anjo-shi Aichi 444-1192 (JP)
(74) Representative: Heunemann, Dieter
(86) International application number: PCT/JP2007/070727
(87) International publication number: WO 2008/050800

(56) References cited:
- WO-A1-2007/034911
- GB-A- 2 242 484
- GB-A- 2 281 362
- GB-A- 2 338 717
- JP-A- 57 171 159
- JP-A- 63 149 313
- JP-A- 2000 130 527
- JP-A- 2002 363 726
- JP-A- 2003 056 669
- JP-A- 2005 264 262
- US-A1- 2003 205 297

## Description

### TECHNICAL FIELD

The present invention relates to a method of manufacturing sheave members that are used in a belt-type continuously variable transmission.

### BACKGROUND ART

In addition to a stepped automatic transmission in which various types of gears are combined, what is termed a belt-type continuously variable transmission is an example of a speed change apparatus for transferring drive power from the engine of an automobile to the drive wheels. The belt-type continuously variable transmission is a transmission that enables continuously changing the speed by wrapping a belt between an input-side pulley and an output-side pulley, and changing the pitch radius in the pulleys.
Parts that structure each pulley include a shaft, a fixed sheave having a conical sheave surface that is fixed to the shaft, and a movable sheave that has a conical sheave surface and is attached to the shaft so as to move on the shaft. The fixed sheave and the movable sheave are, for the sake of convenience, simply referred to as CVT sheaves.

These CVT sheaves are provided with a sheave surface to be brought into frictional contact with the belt, and the abrasion resistance of the sheave surface and the like and increasingly higher precision of the dimensions are pursued as quality requirements. Thus, for example, in the conventional manufacturing methods for CVT sheaves, after forming the sheave into the desired shape, a quenching process is carried out immediately after carrying out prolonged heating for a carburization process. Subsequently, a grinding process is carried out in order to improve the dimensional precision. In addition, after the grinding process, in some cases, a shot peening process is carried out on the sheave surface (refer to Patent Document 1).

### [Patent Document 1]

Japanese Patent Application Publication No. JP-A-2001-130527 The generic GB 2 281 362 discloses a method of treating a case hardening steel by carburizing, slow cooling, again heating for an hour, and oil quenching.

### DISCLOSURE OF THE INVENTION

### [Problem to be Solved by the Invention]

However, in the manufacturing method for a known CVT sheave, what is termed the carburization quenching process, in which quenching is carried out immediately after prolonged carburization process such as that described above has been carried out, but as this quenching step, oil quenching is carried out that enables the suppressing of the occurrence of distortions more than water quenching. However, no matter how much the occurrence of distortions may be suppressed by using oil quenching, it is not possible to maintain the dimensional precision that conforms to the required quality. Thus, as explained above, a grinding process is carried out after quenching, but in order to use grinding to correct the deterioration of the dimensions and shape caused by distortion, it is necessary to provide a grinding allowance up to a comparatively deep range. In addition, thus, in the carburization process, it is necessary to form a carburization layer up to a depth equal to or greater than the grinding allowance such that a carburization layer remains even after grinding, and an extremely long carburization heating time is necessary.
In light of the foregoing circumstances, in order to manufacture CVT sheaves more efficiently, reducing the process time while maintaining dimensional precision and hardness characteristics that are equivalent to those of the related art has been demanded.

In consideration of the problems of the related art described above, it is an object of the present invention to provide a manufacturing method for a CVT sheave that enables maintaining dimensional precision and hardness characteristics that are equivalent to those of the related art, and enables the shortening of the process time.

### [Means for Solving the Problem]

The present invention provides a method of manufacturing a sheave member for a belt-type continuously variable transmission that is provided with a sheave surface to be brought into contact with the belt comprising the steps of claim 1.

The manufacturing method of a CVT sheave of the present invention carries out, after the heating for the carburization treatment has been carried out in the carburization step, the cooling step in which gradual cooling is carried out at a cooling speed that is slower than the speed at which the microstructure of the intermediate body undergoes the martensitic transformation, without carrying out quenching as described above. Thus, it is possible to suppress the occurrence of distortions significantly in comparison to the case in which quenching is carried out in a state before the subsequent quenching step.

Next, in the present invention, the desired part of the intermediate body following the carburization step is water quenched after high-frequency heating. In this quenching step, rather than heating the entire member, only the part whose strength is to be increased by quenching is rapidly heated by using a high frequency. Then, this part is rapidly cooled by water quenching. By using water quenching, it is possible to increase the cooling effect, and it is possible to increase the strength more than the case of conventional oil quenching. Furthermore, more than the case in which the entire member undergoes a quenching step as is done conventionally, it is possible to suppress the occurrence of distortion during the quenching step significantly. Due to such an increase in the distortion suppressing effect and the quenching effect, it is possible to reduce the carburization degree and, at the same time, it is possible to reduce the grinding allowance of the subsequent grinding process. Furthermore, in the case in which a reduction in the grinding allowance is realized, it is possible to reduce the depth of the carburization layer that is formed in the carburization step. Thus, it is possible to shorten the process time in the carburization step.

Therefore, according to the present invention, it is possible to provide a manufacturing method of a CVT sheave that can maintain dimensional precision equivalent to that of the related art and that can shorten the process time.

The present invention provides a sheave member (CVT sheave) for a belt-type continuously variable transmission. The sheave member is manufactured by using the manufacturing method according to the present invention.

The CVT sheave of the present invention, as described above, can be manufactured in a short process time, enables cost reduction, and exhibits hardness characteristics that are equivalent to those of the related art as well as superior dimensional precision.

### BRIEF DESCRIPTION OF THE DRAWINGS

[FIG. 1] FIG. 1 is an explanatory drawing that shows the structure of a sheave member (primary shaft) for a primary pulley in a first embodiment.
[FIG. 2] FIG. 2 is an explanatory drawing that shows the structure of a sheave member (primary sliding sheave) for the primary pulley in the first embodiment.
[FIG. 3] FIG. 3 is an explanatory drawing that shows the structure of a sheave member (secondary shaft) for a secondary pulley in the first embodiment.
[FIG. 4] FIG. 4 is an explanatory drawing that shows the structure of a sheave member (secondary sliding sheave) for the secondary pulley in the first embodiment.
[FIG. 5] FIG. 5A is an explanatory drawing that shows the processes of the present invention and FIG. 5B is an explanatory drawing that shows the related art processes in the first embodiment.
[FIG. 6] FIG. 6A is an explanatory drawing that shows the heat pattern of the method of the present invention and FIG. 6B is an explanatory drawing that shows the heat pattern of the comparative method in the first embodiment.
[FIG. 7] FIG. 7A is an explanatory drawing that shows a heat treatment facility for carrying out the method of the present invention and FIG. 7B is an explanatory drawing that shows a carburization quenching facility for carrying out the comparative method in the first embodiment.
[FIG. 8] FIG. 8 is an explanatory drawing that shows the distortion measurement results for the sheave surface of the secondary shaft in a first example.
[FIG. 9] FIG. 9 is an explanatory drawing that shows the distortion measurement results for the sheave surface of the secondary sliding sheave in a second example.
[FIG. 10] FIG. 10 is an explanatory drawing that shows the hardness measurement results for the sheave surface of the primary shaft in a third example.
[F1G. 11 ] FIG. 11 is an explanatory drawing that shows the hardness measurement results for the sheave surface of the primary shaft in a fourth example.
[FIG. 12] FIG. 12 is an explanatory drawing that shows the hardness measurement results for the sheave surface of the secondary shaft in a fifth example.
[FIG. 13] FIG. 13 is an explanatory drawing that shows the hardness measurement results for the shaft portion of the secondary shaft in a sixth example.
[FIG. 14] FIG. 14 is an explanatory drawing that shows the carbon density measurement results for the sheave surface of the secondary shaft in a seventh example.
[FIG. 15] FIG. 15 is an explanatory drawing that shows the cooling pattern of the steel member for test I in a first reference example.
[FIG. 16] FIG. 16 is an explanatory drawing that shows the cooling pattern of the steel member for test 2 in the first reference example.
[FIG. 17] FIG. 17 is an explanatory drawing that shows the cooling pattern of the steel member for test 3 in the first reference example.
[FIG. 18] FIG. 18 is an explanatory drawing that shows the cooling pattern of the steel member for test 4 in the first reference example.
[FIG. 19] FIG. 19 is an explanatory drawing that shows a specific example of the gradual cooling pattern under the reduced pressure in a second embodiment.

### BEST MODES FOR CARRYING OUT THE INVENTION

In the manufacturing method of the present invention, as described above, in the cooling step, gradual cooling is carried out at a cooling speed that is slower than the speed at which the microstructure of the intermediate body undergoes a martensitic transformation. Thus, it is possible to prevent the distortions from occurring due to the phase transition that is referred to as the martensitic transformation. Although the cooling speed that is slower than the speed that induces this martensitic transformation is influenced by material quality, the specific speed can be determined by experiment.

Preferably, in the cooling step, gradual cooling is carried out such that the cooling speed is equal to or less than 20° C/sec at least until the temperature of the intermediate body passes the transformation point A1 (second aspect). In this case, in the case of many of the materials that can be suitably applied to the CVT sheave, it is possible to suppress the martensitic transformation, and it is possible to obtain the effect of suppressing distortion comparatively easily.

In addition, in the cooling step, preferably, gradual cooling is carried out such that the cooling speed is equal to or less than 10° C/sec at least until the temperature of the intermediate body passes the transformation point A1 (third aspect). In this case, it is possible to further suppress the occurrence of what is referred to as thermal distortion caused by variations in the cooling speed in each part.
In addition, in the case in which the cooling speed is too slow, the cooling time becomes long, and a decrease in productivity may occur. Thus, preferably, the cooling speed is equal to or greater than 0.1°C/sec, and more preferably, it is equal to or greater than 0.5°C/sec.
Therefore, preferably the cooling speed is in a range of 0.1 to 20°C/sec, and more preferably the cooling speed is in a range of 0.5 to 10°C/sec.

In addition, in the cooling step, preferably reduced pressure gradual cooling is carried out in which the gradual cooling is carried out while the pressure of a cooling gas that covers the intermediate body is reduced to be lower than atmospheric pressure (fourth aspect).
In the present invention, as described above, a cooling step in which gradual cooling is carried out is adopted, and a high-frequency quenching step is adopted as a quenching step. Thus, it is possible to suppress significantly the occurrence of distortion more than conventional carburization and quenching. Further, in the cooling step before the high-frequency quenching step, most preferably the reduced pressure gradual cooling described above is adopted.

Even if a high-frequency quenching step that has a high distortion suppression effect is adopted, the subsequent grinding allowance must be large in the case in which the intermediate body itself has become distorted before this step. Of course, in the present invention, although it is possible to carry out the suppression of the occurrence of distortion by carrying out the gradual cooling, at parts of the sheave surface and the like where the dimensional precision must be high, a further distortion suppression effect is required. Most preferable as such a measure for further improving distortions is adopting the reduced pressure gradual cooling in the cooling step that is carried out between the carburization step and the high-frequency quenching step.

Specifically, preferably, in the cooling step, when cooling the intermediate body in a cooling gas, the reduced pressure gradual cooling is adopted in which the high-temperature intermediate body that has completed the carburization step is cooled while the pressure of the cooling gas is reduced to a pressure that is less than atmospheric pressure. Thus, in comparison to the case in which cooling is carried out with the cooling gas set at atmospheric pressure, it is possible to suppress more significantly the occurrence of distortions in the intermediate body.

For example, in the case in which the cooling gas is agitated during cooling, it is possible to reduce the differences in the cooling speed in the up wind and down wind portions of the circulating cooling gas in comparison to the case of an atmospheric pressure state, by bring the cooling gas into a reduced pressure state. That is, in the case in which gradual cooling is carried out at atmospheric pressure, simply by bringing the member to be cooled into contact with the cooling gas at atmospheric pressure, the heat exchange proceeds, and the cooling of the cooled member starts. In this case, up wind and down wind portions are generated due to active gas agitation or due to the gas convection caused by heat, and cooling speed differences occur. The temperature differences in the cooled member occur due to the cooling speed differences, and thus thermal treatment distortions occur. In contrast, by bringing the cooling gas into a reduced pressure state, even if there are up wind and down wind portions, the thermal exchange rate is slow by nature, and thus cooling speed differences are unlikely to occur. Thus, when the reduced pressure gradual cooling is adopted, in which the cooling gas is brought into a reduced pressure state, because the cooling progresses in a comparatively uniform manner, the occurrence of thermal treatment distortion is low. In addition, even in the case in which there is no agitation, in the case of a reduced pressure state, it is possible to reduce differences in the cooling speed that are due to the stagnation of portions of the cooling gas that have different temperatures more than the case of atmospheric pressure.

By utilizing the such an effect that is due to the reduced pressure of the cooling gas, it is possible to suppress more significantly the occurrence of distortions in the intermediate body that has been subject to the cooling step and it is possible to proceed to the high-frequency quenching step white maintaining a high dimensional precision. In addition, thus, it is possible to take advantage of the benefits that are due to the high-frequency quenching step described above, and it is possible to produce an intermediate body after quenching that has few distortions and high precision.

In addition, the reduced pressure gradual cooling of the cooling step is carried out on a high-temperature intermediate body that has completed the carburization step, but it is not necessary to continue the reduced pressure state until the cooling has completed. At least after entering the low temperature region in which there is almost no influence on the occurrence of distortions, it is not necessary for the cooling to be carried out in the reduced pressure gradual cooling. Rather, cooling at atmospheric pressure, in which the reduced pressure state has been released, or cooling in a state in which the pressure has been actively increased to be equal to or greater than atmospheric pressure may be carried out.
In addition, during the reduced pressure gradual cooling as well, it is possible to lower the reduced pressure conditions midway and change the agitation conditions. Rather, in the low temperature region in which there is less concern about the occurrence of distortions, in an industrial context, changing to conditions that enable the improving of the cooling efficiency is preferable.

The completion period of the reduced pressure gradual cooling can be managed depending on the temperature of the intermediate body or the cooling time. The optimal conditions therefore change according to the types of the materials of the intermediate body (the CVT sheave), the amount that is processed at one time, the type of the cooling gas, the performance of the agitating apparatus for the cooling gas and the like. Therefore, preferably, the management values are determined by experiment, and the process is carried out according to these values.
In the case in which the completion period of the reduced pressure gradual cooling is determined according to the temperature, it is possible to set the period when, for example, a predetermined temperature equal to or less than 500° C has been reached. It is possible to exert the operational effect sufficiently if the reduced pressure gradual cooling is carried out under conditions that enable the suppression of the occurrence of distortions up to at least 500° C.

In addition, in the cooling step, the effect of suppressing distortion becomes high in comparison to the case of an atmospheric pressure state, even if the cooling gas in the reduced pressure state is not agitated. However, more preferably, a suitable agitation is carried out to prevent the stagnation of the cooling gas.
Specifically, the reduced pressure gradual cooling is preferably carried out while agitating the cooling gas (fifth aspect). Thus, it is possible to increase the effect of the suppression of distortions more significantly.

In addition, preferably, the reduced pressure gradual cooling is carried out at least from before the microstructure transformation of the intermediate body due to cooling starts until the entire microstructure transformation has completed (sixth aspect). Specifically, in the case in which the intermediate body is cooled from the austenite state to room temperature, the microstructure transformation is always accompanied, and distortions will necessarily readily occur in the microstructure transformation. In particular, if the cooling conditions during the microstructure transformation vary depending on the part, distortions readily occur. Thus, preferably, the microstructure transformation of the intermediate body is completed during the period of the cooling step.

In addition, the reduced pressure state of the cooling gas in the reduced pressure gradual cooling is preferably set within a range of 0.1 bar to 0.65 bar (seventh aspect). In the case in which the reduced pressure state is set to less than 0.1 bar, there is a problem in that a pressure reducing apparatus becomes excessively costly. In contrast, in the case in which 0.65 bar is exceeded, there is a problem in that the operational effect due to the reduced pressure of the cooling gas becomes small.
Thus, the reduced pressure state of the cooling gas in the reduced pressure gradual cooling is preferably set within a range of 0.1 bar to 0.3 bar (eighth aspect). In particular, by setting the range to be equal to or less than 0.3 bar, it is possible to increase the effect due to the reduced pressure described above.

In addition, in the cooling step, it is possible to carryout the cooling under the condition that the agitation speed of the cooling gas is increased after the temperature of the intermediate body has become equal to or less than the transformation point A1 (ninth aspect). Specifically, the reduced pressure gradual cooling in the cooling step is carried out in a reduced pressure state, and thus the cooling efficiency is reduced more than when carried out at atmospheric pressure or greater. Thus, after entering the temperature region that is equal to or less than the transformation point A1, in which the temperature of the intermediate body does not influence the occurrence of distortions, it is possible to improve even marginally the cooling efficiency by increasing the agitation speed of the cooling gas. The easiest method is to drop the agitation speed at the start of the cooling step to 0 or to a minimum speed, and subsequently, to increase the agitation speed after the temperature of the intermediate body has become equal to or less than the transformation point A1. Thus, the cooling performance is increased after the temperature of the intermediate body has become equal to or less than the transformation point A1, and it is possible to shorten the overall cooling time. In addition, as a method for increasing the agitation speed, a method in which the agitation speed is suddenly increased may be used, but more preferably, a method in which the agitation speed is gradually increased is used.

In addition, in the cooling step described above, it is possible to carry out the cooling under the condition that the pressure of the cooling gas be increased after the temperature of the intermediate body has become equal to or less than the transformation point A1 (tenth aspect). In this case, after entering the temperature range that is equal to or less than the transformation point A1, at which the temperature of the intermediate body does not influence the occurrence of distortions, it is possible to increase the cooling speed by increasing the pressure of the cooling gas, and it is possible to shorten the overall cooling time. Of course, it is possible to use a method in which the pressure of the cooling gas is increased along with a method in which the agitation speed is increased, as described above.
In addition, the pressure increase during the cooling step is always carried out in a range that is lower than atmospheric pressure. In addition, the pressure increase may be carried out all at once, but preferably, the pressure increase is carried out gradually. Note that, as described above, after the cooling step has completed, an increase to atmospheric pressure or greater cannot be avoided.

In addition, in the cooling step, as a cooling gas, it is possible to use various cooling gases that differ from the carburization gas in the reduced pressure carburization step. In particular, preferably the cooling gas is nitrogen gas (N₂ gas). In this case, it is possible to suppress the oxidizing of the intermediate body while it is cooling. Of course, it is possible to select various well-known gases as the cooling gas.

In addition, the carburization step is preferably a reduced pressure carburization step in which the intermediate body is subject to carburization treatment in a carburization gas under reduced pressure (eleventh aspect). In this reduced pressure carburization, it is possible to carry out the carburization treatment by using a comparatively small amount of the carburization gas while maintaining the interior of the high-temperature carburization furnace in a reduced pressure state. Thus is it possible to carry out the carburization treatment at a higher efficiency than in the related art.

In addition, in the carburization step, the intermediate body is heated to a temperature equal to or greater than the austenitizing temperature, and preferably, the intermediate body is heated to a temperature equal to or greater than an austenitizing temperature, under the condition of a reduced pressure of 0.001 to 0.1 bar (twelfth aspect). In the case in which the reduced pressure during carburization is less than 0.001 bar, there is a problem in that costly equipment is necessary for maintaining a vacuum. In contrast, in the case in which the reduced pressure exceeds 0.1 bar, there is a concern that there will be a problem in that soot is produced during carburization and thereby irregularities in the carburization density will occur.
In addition, for example, acetylene, propane, butane, methane, ethylene, ethane, and the like can be used as the carburization gas.

In addition, in the reduced pressure carburization step, it is possible to adopt a high concentration carburization in which a compound of iron and carbon is deposited in the surface layer by increasing the surface density compared to that of normal carburization, or a carbonitriding treatment in which a nitriding treatment is carried out along with the carburization treatment.

In addition, preferably, the material is a carbon steel that incorporates C: 0.20 to 0.45%, as a mass percent (thirteenth aspect). In the case of a high carbon steel in which the amount of incorporated C exceeds 0.45%, there are problems in that the efficiency of the grinding process before the heating step deteriorates, and the service life of the grinding instruments is shortened. In contrast, in the case in which the amount of incorporated C is less than 0.20%, there is a problem in that the portions at which a carburization layer is not formed cannot be sufficiently strengthened.

In addition, in the case in which the material quality is within the range described above, in the carburization step, preferably, the maximum carburization density of the carburization layer is C: 0.5 to 1.0 mass percent (fourteenth aspect). In the case in which the carburization density of the carburization layer is less than C: 0.5 mass percent, there is a problem in that the hardness improvement effect due to the carburization cannot be sufficiently attained, while in contrast, in the case in which the carburization density exceeds 1.0 mass percent, cementite (Fe3C), which is harmful in terms of the strength at the austenite crystal grain boundaries of the material, is generated, and there is a concern that this will bring about a reduction in the strength.

In addition, in the case in which the reduced pressure carburization step and the reduced pressure gradual cooling step are carried out successively, at an actual facility, it is possible to connect the reduced pressure carburization chamber and the reduced pressure gradual cooling chamber directly, and it is not necessary to provide a preparatory chamber or the like therebetween so as to adjust the reduced pressure. Specifically, the reduced pressure carburization step and the reduced pressure gradual cooling step are both carried out under a reduced pressure, and thus it is possible to make the pressure difference between both steps small. Thus, it is possible to carry out the reduced pressure gradual cooling treatment without exposing the product that has completed the reduced pressure carburization treatment to normal atmospheric pressure, and a treatment that suppresses the occurrence of distortions and has a high efficiency becomes possible.

In addition, the cooling speed of the water quenching in the quenching step is preferably 200° C/sec to 2000° C/sec (fifteenth aspect). When the cooling speed is slower than 200° C/sec, there is a concern that the quenching effect cannot be sufficiently obtained, while in contrast, when the cooling speed exceeds 2000° C/sec, realizing quenching is difficult.

### [Embodiments]

### (First Embodiment)

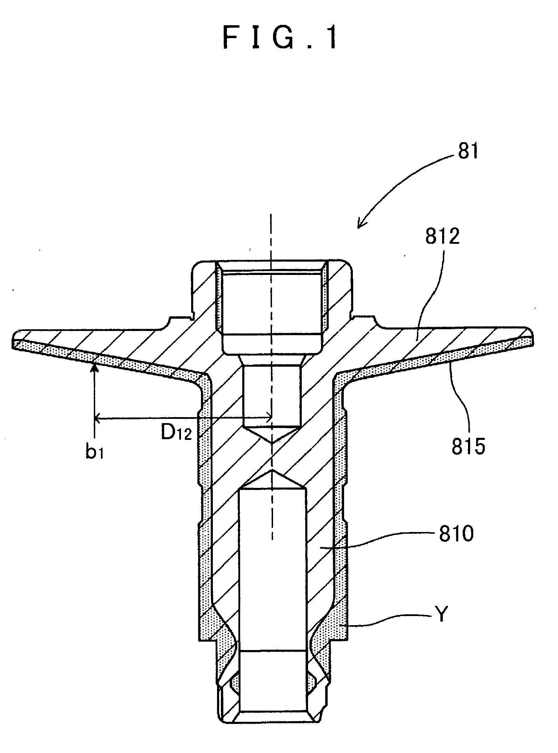

A manufacturing method for a CVT sheave according to an embodiment of the present invention and the evaluation results (first to eighth examples) of the CVT sheave that have been obtained will be explained with reference to FIG. 1 to FIG. 15.

In this embodiment, as shown in FIG. 1 to FIG. 4, there are a total of four types of manufactured CVT sheaves: a pair of sheave members (CVT sheaves) 81 and 82 that structure the primary pulley in the belt-type continuously variable transmission and a pair of sheave members (CVT sheaves) 83 and 84 that form the secondary pulley in the belt-type continuously variable transmission. The basic structure of the belt-type continuously variable transmission is structured by suspending a belt in a groove portion in the primary pulley that consists of the CVT sheaves 81 and 82 and a groove portion in the secondary pulley that consists of the CVT sheaves 83 and 84.

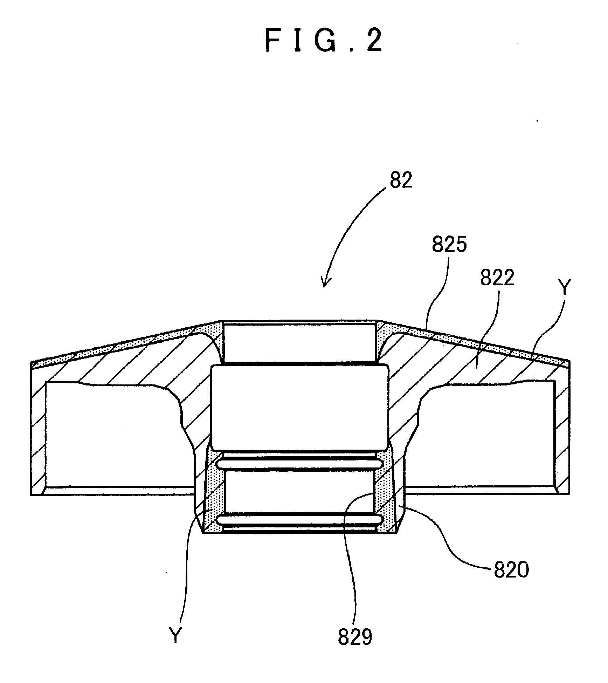

As shown in FIG. 1, the CVT sheave 81 includes a shaft portion 810 and a sheave portion 812 that are integrally formed, and the conically shaped surface of the sheave portion 812 is a sheave surface 815. Below, this CVT sheave 81 will also be referred to as a primary shaft 81.
As shown in FIG. 2, the CVT sheave 82 includes an external tubular portion 820, that is provided with a through hole 829 into which the shaft portion 810 of the primary shaft 81 can be inserted, and a sheave portion 822, and the conical surface of the sheave portion 822 is a sheave surface 825. The CVT sheave 82 is installed so as to be able to slide relatively in an axial direction while mounted on the shaft portion 810 of the primary shaft 81. Below, this CVT sheave 82 will also be referred to as a primary sliding sheave 82.

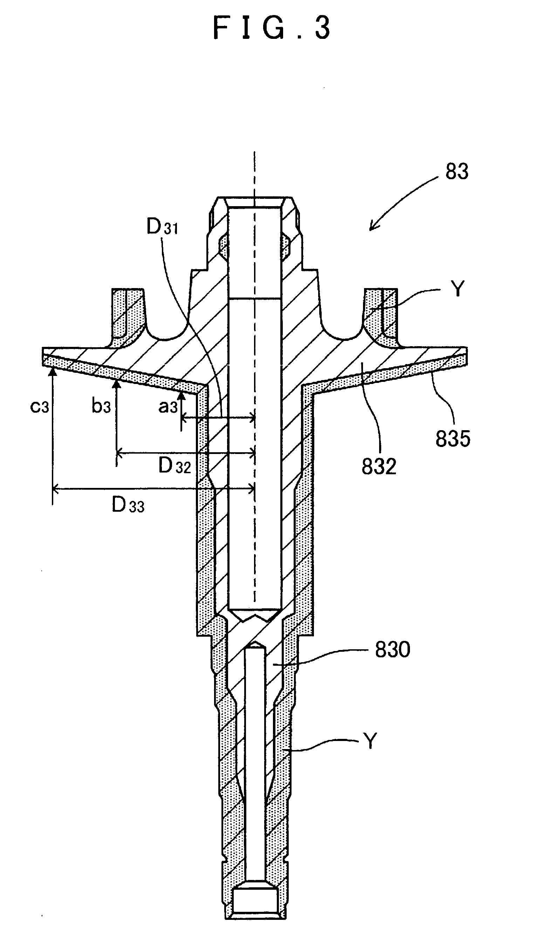

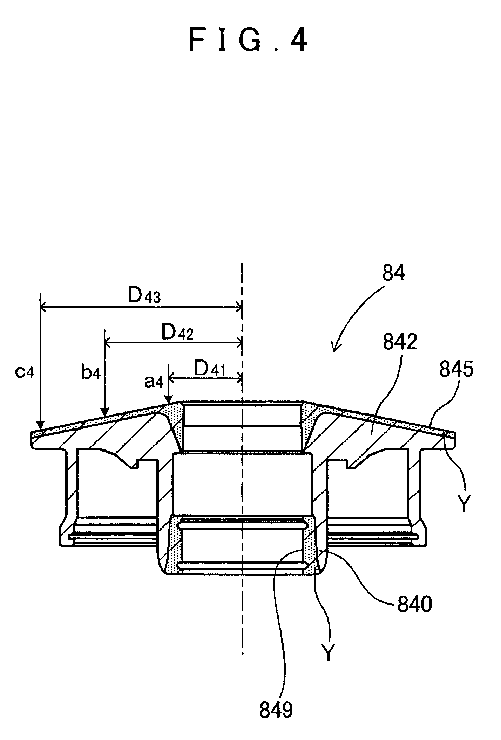

As shown in FIG. 3, the CVT 83 includes a shaft portion 830 and a sheave portion 832 that are integrally formed, and the conically shaped surface of the sheave portion 832 is a sheave surface 835. Below, this CVT sheave 83 will also be referred to as a secondary shaft 83.
As shown in FIG. 4, the CVT sheave 84 includes an external tubular portion 840, that is provided with a through hole 849 into which the shaft portion 830 of the primary shaft 83 can be inserted, and a sheave portion 842, and the conical surface of the sheave portion 842 is a sheave surface 845. The CVT sheave 84 is installed so as to be able to slide relatively in an axial direction while mounted on the shaft portion 830 of the secondary shaft 83. Below, this CVT sheave 84 will also be referred to at a secondary sliding sheave 84.
Note that, as shown in FIG. 1 to FIG. 4, the hatched portion Y is the portion (referred to as the quenched portion Y) that has been hardened by the high-frequency quenching process, which will be described later.

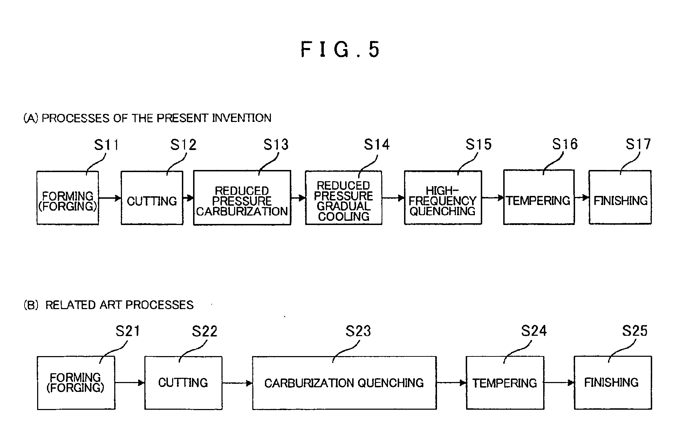

In manufacturing the four types of CVT sheaves 81 to 84, the manufacturing method of the present invention (the method of the present invention) and a method using a related art carburization quenching (comparative method) are carried out for comparison.
As shown in FIG. 5A, the method of the present invention (the processes of the present invention) mainly includes seven steps, that is, steps S11 to S 17.
Step S11 is a molding step in which a forging process is applied to a material consisting of steel to mold the same into intermediate bodies that have a sheave surface, and intermediate bodies (not illustrated) are attained that have a rough shape of each of the CVT sheaves 81 to 84 that have been described above.

Step S 12 is a grinding process in which a grinding treatment is applied to the intermediate bodies, and the external shape is adjusted to a shape close to the final shape.
Step 13 is a carburization process in which the intermediate bodies undergo the carburization treatment by being heated in a carburization gas. In the present embodiment, as will be explained later, a reduced pressure carburization treatment is used.
Step S 14 is a cooling step, in which, when cooling the intermediate bodies that have completed the carburization process, the gradual cooling is carried out such that the cooling speed is equal to or less than 20° C/sec at least until the temperature of the intermediate bodies pass the transformation point A1. In the present embodiment, a reduced pressure gradual cooling such as that described later is used.
Step S 15 is a quenching process in which the desired portion of the cooled intermediate bodies is water quenched after high-frequency heating.
Step S16 is a tempering process in which a tempering treatment is carried out on the intermediate bodies after quenching.
Step S17 is a finishing process in which a grinding process is carried out on the intermediate bodies in order to attain the final shape.

As shown in FIG. 5B, the related art method (related art processes) for comparison mainly includes five steps, that is, steps S21 to S25.
Step S21 is a molding step in which a forging process is applied to a material consisting of steel to mold the same into the intermediate bodies that have a sheave surface, and intermediate bodies (not illustrated) are attained that have a rough shape. This is identical to step S11 described above.

Step S22 is a grinding process in which a grinding treatment is applied to the intermediate bodies, and the external shape is adjusted to a shape close to the final shape. This is identical to step S12 described above.
Step S23 is a carburization quenching process in which a general carburization quenching of the related art is carried out on the intermediate bodies.
Step S24 is a tempering process in which a tempering treatment is carried out on the intermediate bodies after quenching.
Step S25 is a finishing process in which a grinding process is carried out on the intermediate bodies to attain the final shape.

Next, the processes from Step S 13 to S16 among the processes of the present invention and what is referred to as the heat treatment process, which is the processes in steps S23 and S24 in the related art processes, will be explained in more detail.

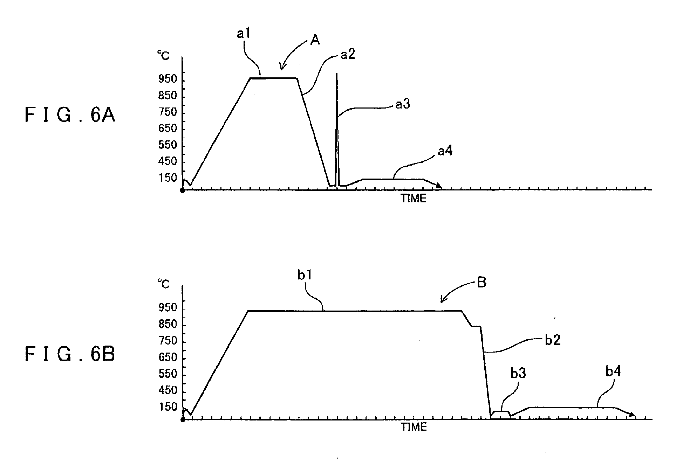

In FIG. 6A, the heat pattern A in the method of the present invention is shown, and in FIG. 6B, the heat pattern B in the comparative method is shown, and these are compared. These figures show the time on the abscissa and the temperature on the ordinate, and the temperatures of the members during heat treatment are shown as the heat patterns A and B.

In the method of the present invention, as can be understood from the heat pattern A in this figure, first, a reduced pressure carburization process A1 (S13) is carried out. In the reduced pressure carburization process A1, a treatment is carried out at 950° C for 75 minutes as a carburization and diffusion treatment under the conditions that the pressure in the carburization chamber at this time is reduced to 200 Pa and the type of the carburization gas is acetylene.
In the cooling process a2 (S15) immediately after the reduced pressure carburization process A1, the cooling gas is nitrogen (N2), the reduced pressure state is 600 hPa, a first step is carried out for 40 minutes in which the agitation of the cooling gas in the furnace is carried out with the speed of the agitation fan set at approximately half the rated rotation speed. Subsequently, the conditions of the reduced pressure gradual cooling are used in which the reduced pressure condition has been lowered to 800 hPa and a second step is carried out for 20 minutes with the speed of the agitation fan increased to the rated rotation speed under the condition that the cooling speed is equal to or less than 10° C/sec at least until a temperature equal to or less than 150° C has been attained.
Next, the quenching process (S16) is carried out under the conditions that the quenched portion Y (FIG. 1 to FIG. 4) of the sheave surface and the like of the intermediate bodies is partially heated to 950° C by high-frequency heating, and subsequently water is sprayed to carry out water quenching. The conditions of the high-frequency heating are altered to conditions that differ for each CVT sheave because the quenching regions differ slightly depending on the type of the CVT sheave. For example, with respect to the sheave surface, the conditions for the primary shaft 81 are a frequency of 8.8 kHz, a set electric power of 200 kW, and a heating time of 6.8 seconds; the conditions for the primary sliding sheave 82 are a frequency of 15 kHz, a set electrical power of 150 kW, and a heating time of 7.5 seconds; the conditions for the secondary shaft 83 are a frequency of 8.8 kHz, a set electrical power of 270 kW, and a heating time of 6.0 seconds; and the conditions for the secondary sliding sheave 84 are a frequency of 15 kHz, a set electric power of 150 kW, and a heating time of 5.8 seconds. In addition, with respect to the inner diameter side of the primary sliding sheave 82 and the secondary sliding sheave 84, the conditions for the primary sliding sheave 82 are a frequency of 30 kHz, a set electric power of 60 kW, and a heating time of 6.2 seconds, and the conditions for the secondary sliding sheave 84 are a frequency of 30 kHz, a set electrical power of 60 kW, and a heating time of 6.7 seconds.
Furthermore, a tempering process a4 (S 17) that is maintained for 70 minutes at 150° C is added.

In contrast, as can be understood from the heat pattern B in the figures, the comparative method carries out a typical carburization process b1, in which the intermediate bodies are heated up to 950° C, which is the carburization temperature, and then maintained at this temperature for 430 minutes, and subsequently a quenching process b2 is carried out, in which, after maintaining 850° C, which is the quenching temperature, oil quenching is carried out (S23). In addition, in the comparative method, a post-washing process b3, in which the cooling agent (oil) that has adhered during the oil quenching is washed off, and a tempering process b4, which aims to maintain the toughness of the quench-hardened layer, are carried out (S24).

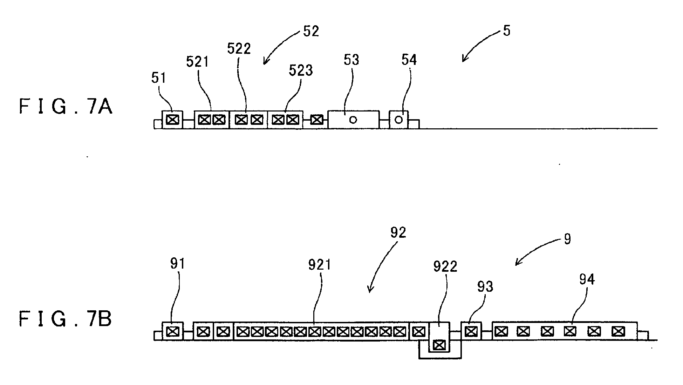

Next, the heat treatment facility 5 for carrying out the method of the present invention and the carburization quenching facility 9 for carrying out the comparative method will be briefly explained.
As shown in FIG. 7A, the heat treatment facility 5 for implementing the method of the present invention is provided with a pre-washing vessel 51 for washing the steel member before the carburization quenching treatment, a reduced pressure carburization gradual cooling apparatus 52 that is provided with a heating chamber 521, a reduced pressure carburization chamber 522, and a reduced pressure cooling chamber 523, a high-frequency quenching machine 53, and a magnetic defect inspection apparatus 54 for testing for defects.

As shown in FIG. 7B, the carburization quenching facility 9 for implementing the comparative method is provided with a pre-washing vessel 91 for washing the steel member before the carburization quenching treatment, a long carburization furnace 92 that is provided with a carburization furnace 921 for carrying out heating, carburization, and diffusion, and a quenching oil vessel 922, a post-washing vessel 93 for washing the steel member after the carburization quenching treatment, and a tempering furnace 94 for carrying out a tempering treatment.

### (First Example)

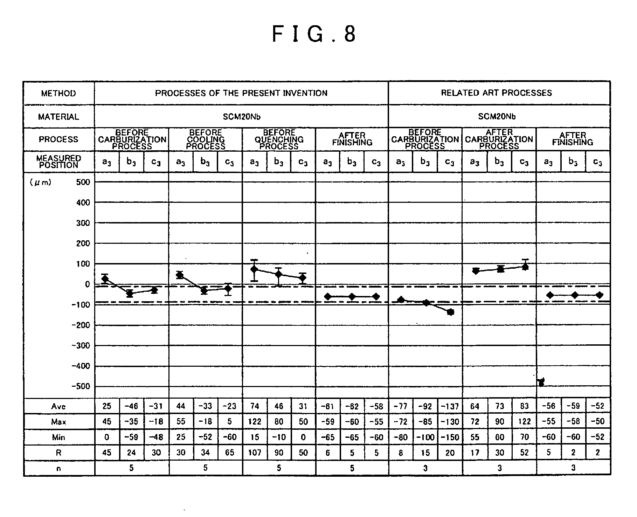

Next, as shown in FIG. 8, the conditions of the distortion occurrence in the secondary shafts 83 that have been manufactured by the processes of the present invention and the related art processes that have been described above were evaluated.
Note that, as a raw material, SCM420Nb manufactured by Aichi Steel (KK) was used for both the product of the processes of the present invention and the product of the related art processes. The chemical composition thereof is shown in TABLE 1.

| | Chemical composition (mass %) of SCM420Nb | | | | | | | | | | | | | | | |
|---|---|---|---|---|---|---|---|---|---|---|---|---|---|---|---|---|
| | C | Si | Mn | P | S | Cu | Ni | Al | Cr | Mo | V | N | Ti | B | Nb | Fe |
| Standard | 0.17 ~ 0.23 | 0.15 ~ 0.35 | 0.55 ~ 090 | <0.03 | 0.010 ~ 0.025 | <0.3 | <0.25 | 0.025 ~ 0.040 | 0.85 ~ 1.25 | 0.15 ~ 0.35 | - | 0.0014 ~ 0.0020 | - | - | 0.05 ~ 0.08 | bal. |
| Results | 0.21 | 0.25 | 0.74 | 0.026 | 0.018 | 0.14 | 0.07 | 0.028 | 1.13 | 0.16 | - | 0.001 | - | - | 0.06 | bal. |

In FIG. 8, with respect to the processes of the present invention, the results of distortion measurements at four times are shown: before the carburization process S13, after the cooling process S14, after the high-frequency quenching process S15, and after the finishing process S17. With respect to the related art processes, the results of the distortion measurements at three times are shown: before and after the carburization quenching process S23, and after the finishing process S25.

As shown in FIG. 3 described above, the distortion measurements of the secondary shaft 83 were carried out at three locations (a₃ to c₃) on the sheave surface 835. The measured position a₃ is a position at which the distance D₃₁ from the shaft center of the secondary shaft 83 is 60 mm, the measured position b₃ is a position at which the distance D₃₂ from the shaft center is 98 mm, and the measure position c₃ is a position at which, the distance D₃₃ from the shaft center is 135 mm. In addition, the evaluation was carried out by measuring the distance between each of the measured positions and a predetermined reference point in an axial direction, and calculating the difference between this distance and a target value. In addition, the evaluation was carried out by using the average value (AVE) of the entire circumference, the maximum value (MAX) for the entire circumference, and the minimum value (MIN) for the entire circumference, and the difference (R) between the maximum value and the minimum value. Note that the number of the experiments is shown as n. In addition, in the middle section in FIG. 8, the measurement results are shown as a graph.

As can be understood from the figure, in the case of the processes of the present invention, through the entire heat treatment process, the shape characteristics were stable, and it can be understood that the relative positional relationships between at least the measured position a₃ and the measured position c₃ change little.
In contrast, in the case of the related art processes, it can be understood that the distortion of the shape changed significantly before the carburization quenching and after the carburization quenching.
From the above results, in the case in which the processes of the present invention are used, it is possible to suppress the occurrence of distortions due to the heat treatment process, compared to the case in which the related art processes are used. Further, if the shape before the heat treatment is suitably controlled, it can be said that a manufacturing design in which the grinding allowance for the final finishing process is reduced is also possible.

### (Second Example)

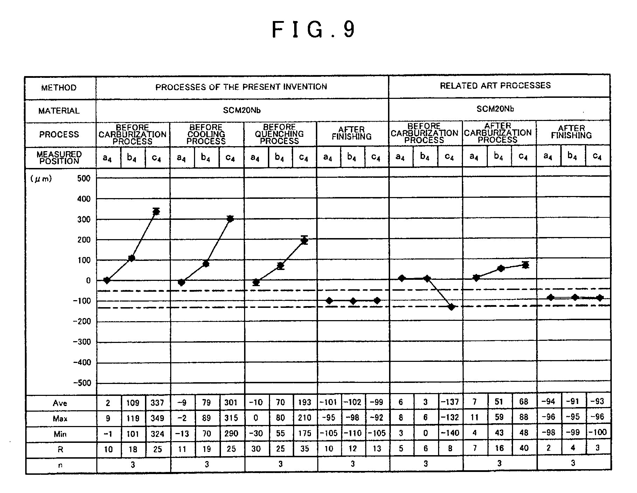

Next, as shown in FIG. 9, the conditions of the distortion occurrence for the above-described secondary sliding sheaves 84 that have been manufactured by the processes of the present invention and the related art processes that have been described above were evaluated.

Note that, as a raw material, SCM420Nb manufactured by Aichi Steel (KK) was used for both the product of the processes of the present invention and the product of the related art processes.

In FIG. 9, with respect to the processes of the present invention, the results of distortion measurement at 4 times are shown: before the carburization process S13, after the cooling process S14, after the high-frequency quenching process S15, and after the finishing process S 17. With respect to the related art processes, the results of distortion measurement at 3 times are shown: before and after the carburization quenching process S23, and after the finishing process S25.

As shown in FIG. 4, the distortion measurements of the secondary sliding sheaves 84 described above were carried out at three locations (a₄ to c₄) on the sheave surface 845. The measured position a₄ is a position at which the distance D₄₁ from the shaft center of the secondary sliding sheave 84 is 55 mm, the measured position b₄ is a position at which the distance D₄₂ from the shaft center is 98 mm, and the measured position c₄ is a position at which the distance D₄₃ from the shaft center is 135 mm. In addition, the evaluation was carried out by measuring the distance between each of the measured positions and a predetermined reference point in an axial direction, and calculating the difference between the distance and a target value. In addition, similar to the case of the first example, the evaluation was carried out by using the average value (AVE) for the entire circumference, the maximum value (MAX) for the entire circumference, and minimum value (MIN) for the entire circumference, and the difference (R) between the maximum value and the minimum value. Note that the number of the experiments is shown as n. In addition, in the middle section in FIG.9, the measurement results are shown as a graph.

As can be understood from the figure, similar to the case of the first example, in the case of the processes of the present invention, it can be understood that through the entire heat treatment process, the shape characteristics are stable, and the relative positional relationships between at least the measured position a₄ and the measured position c₄ change little.
In contrast, in the related art processes, it can be understood that the distortion of the shape changes significantly before the carburization quenching and after the carburization quenching.
From the above results, in the case in which the processes of the present invention are used, it is possible to suppress the occurrence of distortions caused by the heat treatment process, compared to the case in which the related art process are used. Further, if the shape before the heat treatment is suitably controlled, it can be said that a manufacturing design in which the grinding allowance for the final finishing process is reduced is also possible.

### (Third Example)

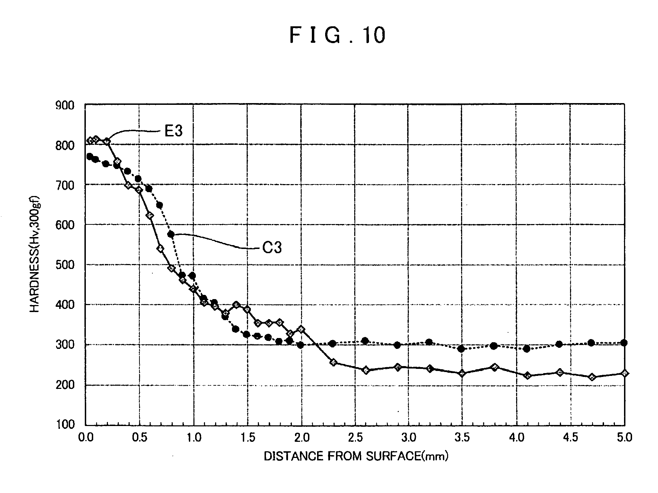

Next, as shown in FIG. 10, the quenching characteristics of the sheave surfaces 815 for the primary shafts 81 that have been manufactured by the processes of the present invention and the related art processes that have been described above were evaluated.
Note that, as a raw material, SCM420Nb manufactured by Aichi Steel (KK) was used for both the product of the processes of the present invention and the product of the related art processes, similar to the above.

As shown in FIG. 1, the hardness measurement of the sheave surface 815 of the primary shaft 81 is carried out by measuring the Vickers hardness under conditions in which the weight that is loaded on an indenter is 300 gf at the cross-section of the measured position b1. The measured position b1 is a position at which the distance D₁₂ from the shaft center of the primary shaft 81 is 98 mm. The results of the hardness measurement are shown in FIG. 10. In this figure, the distance from the surface is shown on the abscissa and the hardness (Hv) is shown on the ordinate. In addition, the results of the processes of the present invention are shown as the reference number E3, and the results of the related art processes are shown as the reference numeral c3.

As can be understood from the figure, in proximity to the uppermost surface, the processes of the present invention, which used a high-frequency quenching that has a high quenching effect, attained a high hardness. At a part that was deeper than 2.0 mm from the surface, the hardness of the related art processes was slightly higher. This is considered to be due to having quenched the entire product. It can be understood that, in either case, when using the processes of the present invention, the characteristics of the surface hardness did not decrease at all, but rather improved.

### (Fourth Example)

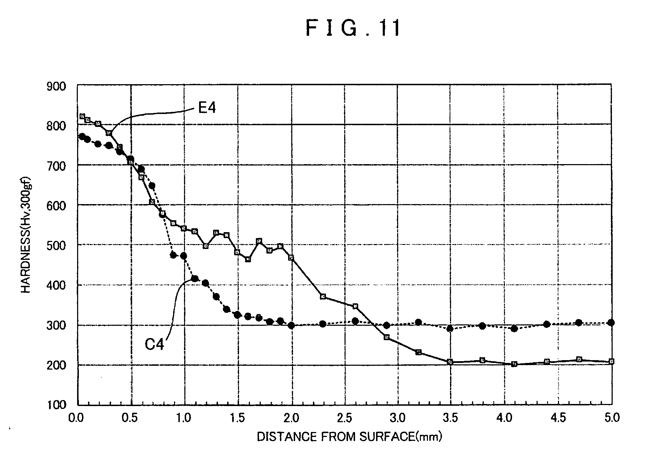

Next, as shown in FIG. 11, the hardness characteristics of the sheave surfaces 815 for the primary shafts 81 that were manufactured by using different materials by the processes of the present invention and the related art processes that have been described above were evaluated.
SGM420Nb manufactured by Aichi Steel (KK) was used as the raw material for the product of the related art processes, similar to the above, while S30C was used as the raw material for the product of the processes of the present invention.

The hardness measurement of the sheave surface 815 of the primary shaft 81 is similar to the case of the third example. The results of the hardness measurement are shown in FIG. 11. In the figure, the abscissa shows the distance from the surface, and the ordinate shows the hardness (Hv). In addition, the results of the processes of the present invention are shown as the referenced numeral E4 and the results of the related art processes are shown as the reference numeral C4.

As can be understood from the figure, in this example as well, in proximity to the uppermost surface, the processes of the present invention, which used a high-frequency quenching that has a high quenching effect, attained a high hardness. At a portion deeper than 2.5 mm from the surface, in the related art processes, the hardness was slightly greater. This is considered to be due to the quenching the entire product. It can be understood that, in either case, even when the processes of the present invention are used, the characteristics of the surface hardness do not decrease at all, but rather, are improved. In addition, from these results, it is understood that even when SCM420Nb, which is a comparatively unique steel, is not used, necessary characteristics can be sufficiently obtained by using the generally used carbon steel, S30C.

### (Fifth Example)

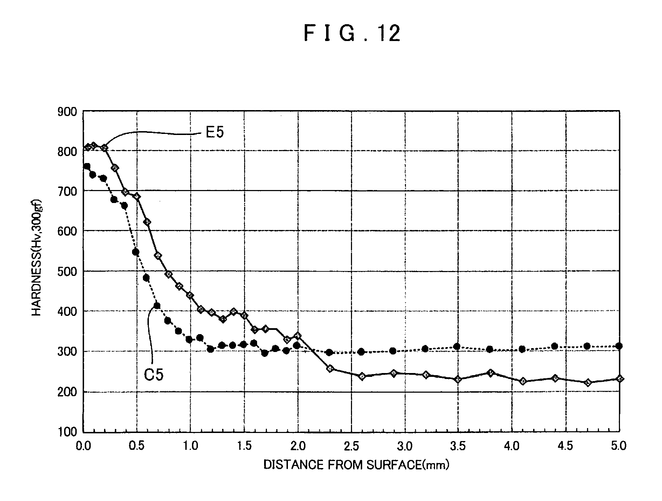

Next, as shown in FIG. 12, the hardness characteristics of the sheave surfaces 835 for the secondary shafts 83 that were manufactured using the processes of the present invention and the related art processes that have been described above were evaluated.
Note that, as the raw material, SCM420Nb manufactured by Aichi Steel (KK) was used for both the processes of the present invention and the related art processes.

The hardness measurement of the sheave surface 835 of the secondary shaft 83 is performed in the same manner as in the third example described above, and was carried out on the measured position b₃. The results of the hardness measurement are shown in FIG. 12. In the figure, the abscissa shows the distance from the surface and the ordinate shows the hardness (Hv). In addition, the results for the processes of the present invention are shown by reference numeral E5 and the results for the related art processes are shown by the reference numeral C5.

As can be understood from the figure, in the present example as well, in proximity to the outermost surface, the processes of the present invention, which uses a high-frequency quenching that has a high quenching effect, attained a high hardness. In a portion 2.0 mm from the surface, the related art processes were slightly higher. This is considered to be due to the entire product being quenched. In either case, when using the processes of the present invention as well, it can be understood that the characteristics of the surface hardness were not reduced, but rather improved.

### (Sixth Example)

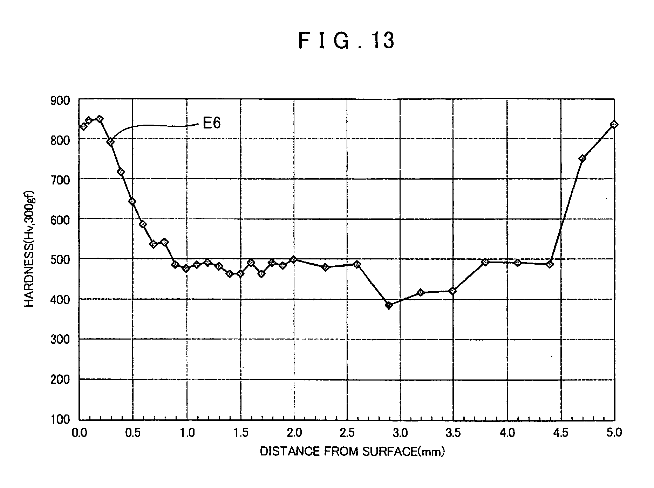

Next, as shown in FIG. 13, the hardness characteristics of the shaft portion 830 of the secondary shaft 83 that was manufactured by the processes of the present invention described above were evaluated.
Note that the raw material is SCM420Nb manufactured by Aichi Steel (KK).

As shown in FIG. 3, the hardness measurement of the shaft portion 830 of the secondary shaft 83 was carried out at the cross-section of the position of the measured position d₃ on the outer circumferential surface of the shaft portion 830. The results of the hardness measurement are shown in FIG. 13. In this figure, the abscissa shows the distance from the surface, and the ordinate shows the hardness (Hv). In addition, the results of the processes of the present invention are shown by the reference numeral E6.

As can be understood from the figure, in the present example, in proximity to the surface and in proximity to the inner surface, it can be understood that the hardness increasing effect has been sufficiently obtained.

### (Seventh Example)

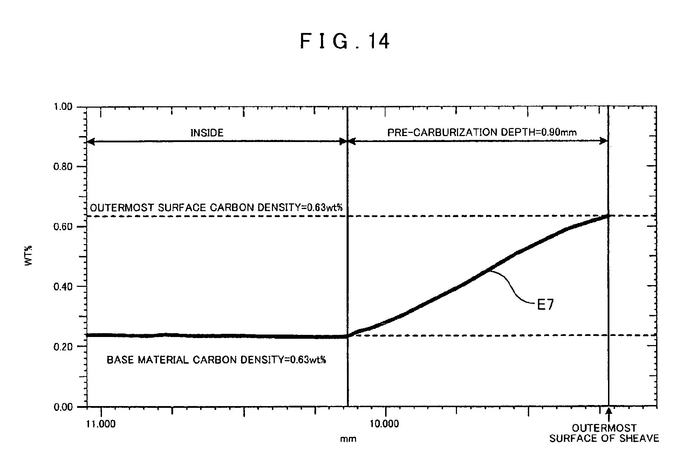

Next, as shown in FIG. 14, the carbon density of the cross-section of the sheave surface 835 was measured on the secondary shaft 83 that has been manufactured by the processes of the present invention described above, in order to evaluate the effect of the carburization process (S13). Specifically, the measurement of the carbon density was carried out by using an electron probe micro analyzer (EPMA).
Note that, as a raw material, SCM420Nb manufactured by Aichi Steel (K-K) was used.

The carbon density measuring position of the sheave surface 835 of the secondary shaft 83 was the measurement position b3. The results are shown in FIG. 14. In the figure, the abscissa shows the distance from the surface, and the ordinate shows the carbon density (wt%). In addition, the measurement results are shown by reference numeral E7 after curve smoothing.

As can be understood from the figure, in proximity to the outermost surface, it can be understood that the carburization process was carried out sufficiently such that the carbon density reached, at a maximum, 0.63 wt%.

### (Eighth Example)

Next, the static torsion test for the secondary shafts 83 manufactured by the processes of the present invention and the related art processes that have been described above was carried out.
Note that, as a raw material, SCM420Nb manufactured by Aichi Steel (KK) was used for both the product of the processes of the present invention and the product of the related art processes.

A general method of the static torsion test was used, in which both ends of the secondary shaft 83 were held by a testing machine and torsion stress is applied to the both ends of the secondary shaft 83. In addition, in the present example, the torque at the proportional limit (proportional torque) and the torque during fracturing (fracture torque) were measured and evaluated. The results of the measurements are shown in TABLE 2.

**[TABLE 2]**

| Static torsion test results | | | |
|---|---|---|---|
| Item | | Product of related art processes | Product of processes of the present invention |
| Proportional torque | Measured value (Nm) | 851 | 1358 |
| | Improvement rate with respect to product of related art processes | - | 60%Up |
| Fracture torque | Measured value (Nm) | 2027 | 2287 |
| | Improvement rate with respect to product of related art processes | - | 13%Up |

As can be understood from TABLE 2, with respect to the proportional limit torque, characteristics showing an improvement of 60% over the product of the related art processes were obtained. Furthermore, in the product of the processes of the present invention, with respect to the fracture torque as well, characteristics showing an improvement of 13% over the product of the related art processes were obtained.
Based on the above, in the case in which the processes of the present invention were used, it was found that a significant improvement in the torsion characteristics over the related art case was obtained.

### (First Reference Example)

In the reference example, plural types of method (tests 1 to 3) for reduced pressure gradual cooling that can be used in the cooling process of the processes of the present invention in the first embodiment were carried out, and the condition of the occurrence of distortion was understood. Note that, in the present reference example, rather than the CVT sheaves 81 to 84 that are shown in the first embodiment, an example is shown in which tests were carried out on a ring gear, which is a steel member in which the influence of cooling distortion can be more clearly produced. The results of the reference example can also be applied to the manufacturing method for the CVT sheaves.

### Test I

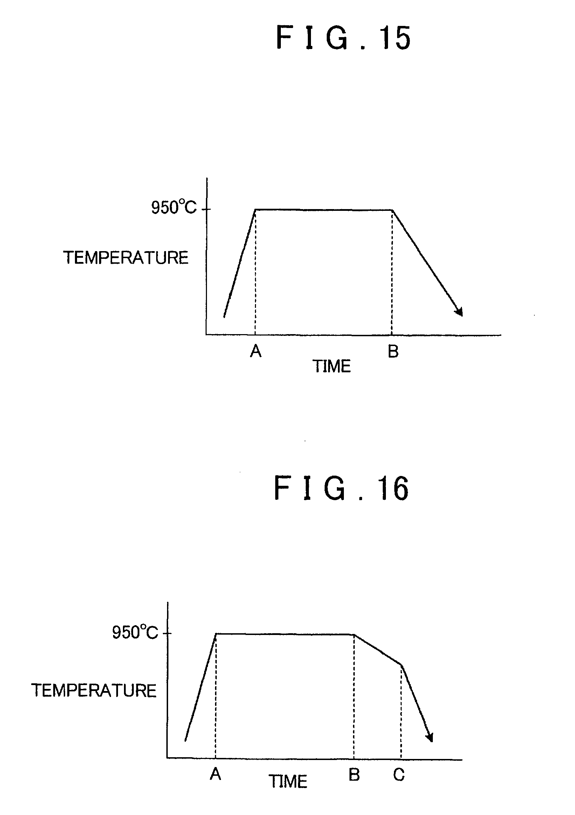

As shown in FIG. 15, in test 1, a carburization treatment was carried out in which the steel member described above was heated to 950° C, which is equal to or greater than the austenitizing temperature, and then the steel member was cooled to 150° C or less.
FIG. 15 shows the temperature history of the steel member, where the abscissa shows the time and the ordinate shows the temperature (FIG. 16 to FIG. 18, which will be described later, are also similar). In the heat treatment, the interval from point A to point B in the figure is the period of the heat treatment, and the cooling interval is the period after point B. In addition, in test 1, from the commencement of the cooling of the steel member until the completion of the cooling thereof, reduced pressure cooling was carried out in which the steel member was cooled while the pressure of the cooling gas was reduced to less than atmospheric pressure.
As conditions for the reduced pressure cooling, N₂ was used as the cooling gas, a constant reduced pressure state of 0.3 bar was set, and agitation of the cooling gas was carried out. A condition was set in which the agitation speed was obtained by operating the agitation fan in the apparatus used for cooling at a constant speed of 550 rpm, which is the rated speed.

### Test 2

As shown in FIG. 16, in test 2, from the commencement of the cooling of the steel member until the completion of the cooling thereof, reduced pressure cooling was carried out in which the cooling of the steel member was carried out while the pressure of the cooling gas was reduced to less than atmospheric pressure. The detailed conditions were different from test 1. Specifically, similar to test 1, as conditions for the reduced pressure cooling, N₂ was used as the cooling gas and a constant reduced pressure state of 0.3 bar was set. However, the condition for the agitation speed was changed such that initially the agitation fan was operated after lowering the rotation speed thereof to a constant speed of 250 rpm, and subsequently, after 15 minutes (point C in FIG. 16), the rotation speed was changed to a constant speed of 550 rpm. Otherwise, the conditions were identical to those of test 1.

### Test 3

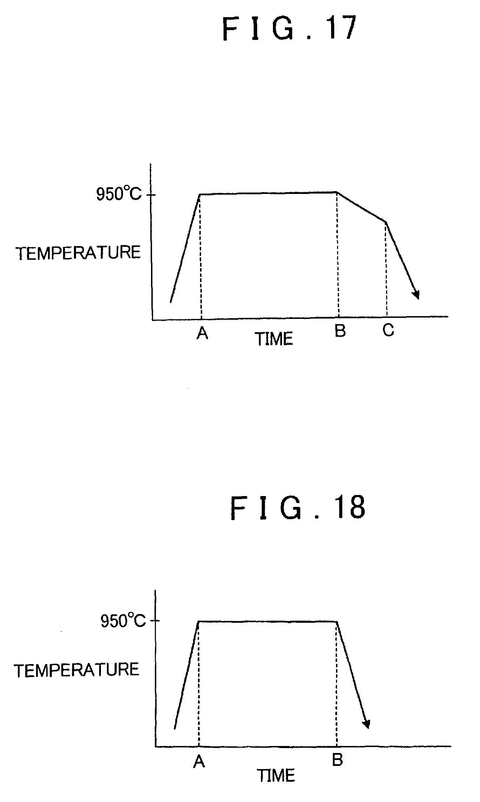

As shown in FIG. 17, in test 3, from the commencement of the cooling of the steel member until the completion of the cooling thereof, reduced pressure cooling was carried out in which the steel member was cooled while the pressure of the cooling gas was reduced to less than atmospheric pressure. However, the detailed conditions were different from test 1. Specifically, as conditions for the reduced pressure cooling, N₂ was used as the cooling gas and a constant reduced pressure state of 0.65 bar was set. Initially, agitation of the cooling gas was not carried out, and subsequently, after 15 minutes (point C in FIG. 17) the condition for the agitation speed was changed to a constant speed of 550 rpm. Otherwise, the conditions were identical to those of test 1.

### Test 4 (Comparative Test)

As shown in FIG. 18, in test 4, from the commencement of the cooling of the steel member until the completion of the cooling thereof, cooling was carried out in which the pressure of the cooling gas was equal to the atmospheric pressure. Specifically, as cooling conditions, the pressure of the cooling gas was set to a constant pressure of 1.0 bar (atmospheric pressure), and as agitation conditions, the rotation speed of the agitation fan was set to a constant speed of 250 rpm, which was below the rated speed. The heat treatment conditions before the cooling were identical to those of test 1.

Next, the ring gear including a plurality of steel members was treated by the cooling method of tests 1 to 3 and test 4, described above, and the amount of distortion was compared by measuring the dimensions of the ring gear.
Steel balls having a predetermined diameter were disposed so as to be in contact with the valley portion of the teeth surface provided on the inner peripheral surface of a ring-shaped body portion, and the evaluation was carried out based on the dimensions that were obtained by measuring the inner diameter dimension (BBD) between the opposing steel balls.
As a result, in the case of tests 1 to 3, in all cases, the elliptical state that was known from the BBD was smaller than test 4 (the comparative test), and the distortion suppression effect was extremely high.

### (Second Embodiment)

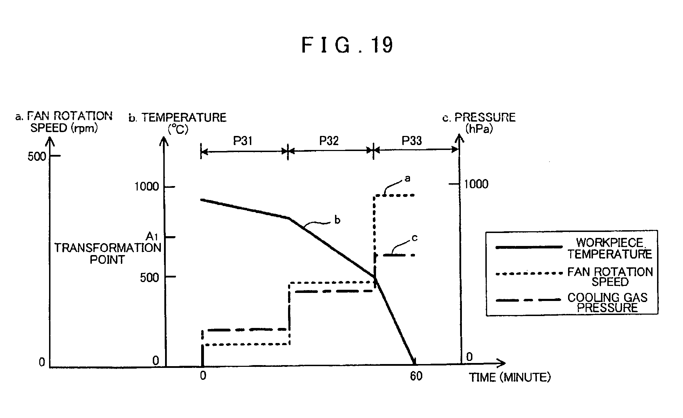

As shown in FIG. 19, in this embodiment, a separate example of the reduced pressure gradual cooling pattern that can be adopted as the reduced pressure gradual cooling process a2 that is shown in the first embodiment will be explained in detail.
In FIG. 19, the abscissa shows time, the first ordinate shows the rotation speed of a cooling fan (a), the second ordinate shows the temperature of the treated member (b), and the third ordinate shows the pressure of the cooling gas (c).

As can be understood from FIG. 19, in this embodiment, during the initial first cooling step P31, the rotation speed of the cooling fan is set low, and at the same time, the reduced pressure gradual cooling is carried out in which the cooling gas pressure is set to a reduced pressure state that is sufficiently lower than atmospheric pressure.

Next, during the second cooling step P32, reduced pressure gradual cooling is carried out in which the rotation speed of the cooling fan is set slightly higher than the case of the first cooling step P31, which is sufficiently lower than the rated speed. Further, the cooling gas pressure is set slightly higher than the case of the first cooling step P31, which is lower than atmospheric pressure, and the cooling capacity of the second cooling step P32 is slightly higher than the first cooling step P31. In this embodiment, during this second cooling step P32, the temperature of the treated member exceeds the transformation point A1.

Next, during the third cooling step P33, quenching conditions are set in which the rotation speed of the cooling fan and the cooling gas pressure are sufficiently increased.

As described above, in the first cooling step P31, in which the initial treated member is in the highest temperature state, it is possible to suppress the occurrence of cooling distortion reliably by carrying out reduced pressure gradual cooling in which the pressure of the cooling gas and the circulating speed (the rotation speed of the cooling fan) are made low. Next, in the second cooling step P32, in which the cooling of the treated member has progressed to a certain degree, because the possibility of the occurrence of cooling distortion is lowered, even though the cooling capacity is slightly increased, the conditions of the reduced pressure gradual cooling are maintained in order to suppress the occurrence of distortion due to the microstructure transformation when exceeding the transformation point A1 of steel. Thus, it is possible to suppress to a large extent the occurrence of distortion when the transformation point A1 is exceeded. Subsequently, in the third cooling step P33, it is possible to maximize the cooling capacity by increasing the pressure of the cooling gas and the circulation speed.

## Claims

1. A method of manufacturing a sheave member (81;82;83;84) for a belt-type continuously variable transmission that is provided with a sheave surface (815;825;835;845) to be brought into contact with the belt, comprising:
a forming step in which an intermediate body that has the sheave surface (815;825;835;845) is formed by applying a forging process to a material consisting of steel; and
a carburization step in which the intermediate body is subject to a carburization treatment by being heated in a carburization gas;
**characterized in that** said method further comprising:
a cooling step in which, when cooling the intermediate body that has completed the carburization step, the intermediate body is gradually cooled at a cooling speed that is slower than a speed at which the microstructure of the intermediate body undergoes a martensitic transformation;
a quenching step in which, after rather than heating the entire member, only a part (Y) of the cooled intermediate body whose strength is to be increased is subject to high-frequency heating this part (Y) is water quenched; and
a finishing step in which a grinding process is applied to the intermediate body to attain a final shape.

2. The method according to claim 1, **characterized in that**, in the cooling step, gradual cooling is carried out such that the cooling speed is equal to or less than 20° C/sec at least until the temperature of the intermediate body passes the transformation point A1.

3. The method according to claim 1, **characterized in that**, in the cooling step, gradual cooling is carried out such that the cooling speed is equal to or less than 10° C/sec at least until the temperature of the intermediate body passes the transformation point A1.

4. The method according to any one of claims 1 to 3, **characterized in that**, in the cooling step, reduced pressure gradual cooling is carried out in which the gradual cooling is carried out while the pressure of a cooling gas that covers the intermediate body, is reduced to be lower than atmospheric pressure.

5. The method according to claim 4, **characterized in that** the reduced pressure gradual cooling is carried out while agitating the cooling gas.

6. The method according to claim 4 or 5, **characterized in that** the reduced pressure gradual cooling is carried out at least from before the microstructure transformation of the intermediate body has started due to the cooling until the entire microstructure transformation has completed.

7. The method according to any one of claims 4 to 6, **characterized in that** the reduced pressure state of the cooling gas in the reduced pressure gradual cooling is set within a range of 0.1 bar to 0.65 bar.

8. The method according to claim 7, **characterized in that** the reduced pressure state of the cooling gas in the reduced pressure gradual cooling is set within a range of 0.1 bar to 0.3 bar.

9. The method according to any one of claims 4 to 8, **characterized in that**, in the cooling step, cooling is carried out under the condition that the agitation speed of the cooling gas is increased after the temperature of the intermediate body becomes equal to or less than the transformation point A1.

10. The method according to any one of claims 4 to 9, **characterized in that**, in the cooling step, cooling is carried out under the condition that the pressure of the cooling gas is increased after the temperature of the intermediate body becomes equal to or less than the transformation point A1.

11. The method according to any one of claims 1 to 10, **characterized in that** the carburization step is a reduced pressure carburization step in which the intermediate body is subject to a carburization treatment in a carburization gas under a reduced pressure.

12. The method according to claim 11, **characterized in that**, in the carburization step, the intermediate body is heated to a temperature equal to or greater than an austenitizing temperature, under the condition of a reduced pressure of 0.001 1 to 0.1 bar.

13. The method according to any one of claims 1 to 12, **characterized in that** the material is a carbon steel that incorporates C: 0.20 to 0.45 percent, as a mass percent.

14. The method according to claim 13, **characterized in that**, in the carburization step, the maximum carburization density of the carburization layer is C: 0.5 to 1.0 mass percent.

15. The method according to any one of claims 1 to 14, **characterized in that** the cooling speed of the water quenching in the quenching step is 200° C/sec to 2000° C/sec.

16. A sheave member for a belt-type continuously variable transmission, **characterized in that** the sheave member is manufactured by the method according to any one of claims 1 to 15.

## Patentansprüche

1. Verfahren zum Herstellen eines Scheibenelements (81; 82; 83; 84) für ein stufenloses Riemengetriebe, wobei das Scheibenelement eine Scheibenfläche (815; 825; 835; 845) aufweist, die dafür vorgesehen ist, mit dem Riemen in Kontakt gebracht zu werden, mit:
einem Schritt zum Ausbilden eines Zwischenkörpers, der die Scheibenfläche (815; 825; 835; 845) aufweist, durch Schmieden eines aus Stahl bestehenden Materials; und
einem Kohlenstoffanreicherungsschritt, in dem der Zwischenkörper einer Kohlenstoffanreicherungsbehandlung durch Erwärmen in einem Aufkohlungsgas unterzogen wird;
**dadurch gekennzeichnet, dass** das Verfahren ferner die Schritte aufweist:
einen Kühlschritt, in dem der Zwischenkörper nach Abschluss des Kohlenstoffanreicherungsschritts graduell mit einer Abkühlgeschwindigkeit abgekühlt wird, die kleiner ist als eine Geschwindigkeit, mit der die Mikrostruktur des Zwischenkörpers eine martensitische Umwandlung erfährt;
einen Abschreckungsschritt, in dem nur ein Teil (Y) des abgekühlten Zwischenkörpers, dessen Festigkeit erhöht werden soll, wasserabgeschreckt wird, nachdem, anstatt den gesamten Zwischenkörper zu erwärmen, nur dieser Teil einer Hochfrequenzheizbehandlung unterzogen wurde; und
einen Endbehandlungsschritt, in dem der Zwischenkörper einem Schleifprozess unterzogen wird, um eine Endform zu erhalten.

2. Verfahren nach Anspruch 1, **dadurch gekennzeichnet, dass** im Abkühlungsschritt die graduelle Abkühlung mit einer Abkühlgeschwindigkeit von 20°C/s oder weniger augeführt wird, mindestens bis die Temperatur des Zwischenkörpers den Umwandlungspunkt A1 durchläuft.

3. Verfahren nach Anspruch 1, **dadurch gekennzeichnet, dass** im Abkühlungsschritt die graduelle Abkühlung mit einer Abkühlgeschwindigkeit von 10°C/s oder weniger ausgeführt wird, mindestens bis die Temperatur des Körpers den Umwandlungspunkt A1 durchläuft.

4. Verfahren nach einem der Ansprüche 1 bis 3, **dadurch gekennzeichnet, dass** im Abkühlungsschritt eine graduelle Abkühlung bei vermindertem Druck ausgeführt wird, wobei die Abkühlung ausgeführt wird, während der Druck des den Zwischenkörper bedeckenden Kühlgases auf einen Druckwert vermindert ist, der niedriger ist als der Atmosphärendruck.

5. Verfahren nach Anspruch 4, **dadurch gekennzeichnet, dass** die graduelle Abkühlung bei vermindertem Druck ausgeführt wird, während das Kühlgas verwirbelt wird.

6. Verfahren nach Anspruch 4 oder 5, **dadurch gekennzeichnet, dass** die graduelle Abkühlung bei vermindertem Druck mindestens über einen Zeitraum ausgeführt wird, der beginnt, bevor die Mikrostrukturumwandlung des Zwischenkörpers auf Grund der Abkühlung beginnt, und sich bis zum Abschluss der gesamten Mikrostrukturumwandlung erstreckt.

7. Verfahren nach einem der Ansprüche 4 bis 6, **dadurch gekennzeichnet, dass** der verminderte Druck des Kühlgases während der graduellen Abkühlung bei vermindertem Druck auf einen Wert innerhalb des Bereichs von 100 hPa (0,1 Bar) bis 650 hPa (0,65 Bar) eingestellt wird.

8. Verfahren nach Anspruch 7, **dadurch gekennzeichnet, dass** der verminderte Druck des Kühlgases während der graduellen Abkühlung bei vermindertem Druck auf einen Wert innerhalb des Bereichs von 100 hPa (0,1 Bar) bis 300 hPa (0,3 Bar) eingestellt wird.

9. Verfahren nach einem der Ansprüche 4 bis 8, **dadurch gekennzeichnet, dass** im Abkühlungsschritt die Abkühlung derart ausgeführt wird, dass die Verwirbelungsgeschwindigkeit des Kühlgases erhöht wird, nachdem die Temperatur des Zwischenkörpers kleiner oder gleich dem Umwandlungspunkt A1 geworden ist.

10. Verfahren nach einem der Ansprüche 4 bis 9, **dadurch gekennzeichnet, dass** im Abkühlungsschritt die Abkühlung derart ausgeführt wird, dass der Druck des Kühlgases erhöht wird, nachdem die Temperatur des Zwischenkörpers kleiner oder gleich dem Umwandlungspunkt A1 geworden ist.

11. Verfahren nach einem der Ansprüche 1 bis 10, **dadurch gekennzeichnet, dass** der Kohlenstoffanreicherungsschritt ein Kohlenstoffanreicherungsschritt bei vermindertem Druck ist, in dem der Zwischenkörper einer Kohlenstoffanreicherungsbehandlung in einem Aufkohlungsgas unter vermindertem Druck unterzogen wird.

12. Verfahren nach Anspruch 11, **dadurch gekennzeichnet, dass** im Kohlenstoffanreicherungsschritt der Zwischenkörper bei einem verminderten Druck von 1 bis 100 hPa (0,001 bis 0,1 Bar) auf eine Temperatur erwärmt wird, die größer oder gleich einer Austenitisierungstemperatur ist.

13. Verfahren nach einem der Ansprüche 1 bis 12, **dadurch gekennzeichnet, dass** das Material ein Kohlenstoffstahl ist, der 0,20 bis 0,45 Masse-% C aufweist.

14. Verfahren nach Anspruch 13, **dadurch gekennzeichnet, dass** im Kohlenstoffanreicherungsschritt die maximale Kohlenstoffanreicherungsdichte der Kohlenstoffanreicherungsschicht 0,5 bis 1,0 Masse-% C beträgt.

15. Verfahren nach einem der Ansprüche 1 bis 14, **dadurch gekennzeichnet, dass** die Abkühlgeschwindigkeit bei der Wasserabschreckung im Abschreckungsschritt 200°C/s bis 2000°C/s beträgt.

16. Scheibenelement für ein stufenloses Riemengetriebe, **dadurch gekennzeichnet, dass** das Scheibenelement durch ein Verfahren nach einem der Ansprüche 1 bis 15 hergestellt ist.

## Revendications

1. Procédé de fabrication d'un élément de poulie (81 ; 82 ; 83 ; 84) pour une transmission à variation continue du type à courroie qui est pourvue d'une surface de poulie (815 ; 825 ; 835 ; 845) devant être amenée en contact avec la courroie, comportant :
une étape de formation dans laquelle un corps intermédiaire qui a la surface de poulie (815 ; 825 ; 835 ; 845) est formé en appliquant un processus de forgeage sur une matière se composant acier ; et
une étape de carburation dans laquelle le corps intermédiaire est soumis à un traitement de carburation en étant chauffé dans un gaz de carburation ;
**caractérisé en ce que** ledit procédé comporte en outre :
une étape de refroidissement dans laquelle, lors du refroidissement du corps intermédiaire qui a terminé l'étape de carburation, le corps intermédiaire est progressivement refroidi à une vitesse de refroidissement qui est plus lente qu'une vitesse à laquelle la microstructure du corps intermédiaire subit une transformation martensitique ;
une étape de trempe dans laquelle, après que, plutôt que de chauffer l'élément complet, seulement une partie (Y) du corps intermédiaire refroidi dont la résistance doit être accrue soit soumise à un chauffage à haute fréquence, cette partie (Y) est trempée à l'eau ; et
une étape de finissage dans laquelle un processus de meulage est appliqué sur le corps intermédiaire pour atteindre une forme finale.

2. Procédé selon la revendication 1, **caractérisé en ce que**, dans l'étape de refroidissement, un refroidissement progressif est réalisé de telle sorte que la vitesse de refroidissement est égale ou inférieure à 20° C/sec au moins jusqu'à ce que la température du corps intermédiaire passe le point de transformation A1.

3. Procédé selon la revendication 1, **caractérisé en ce que**, dans l'étape de refroidissement, un refroidissement progressif est réalisé de telle sorte que la vitesse de refroidissement est égale ou inférieure à 10° C/sec au moins jusqu'à ce que la température du corps intermédiaire passe le point de transformation A1.

4. Procédé selon l'une quelconque des revendications 1 à 3, **caractérisé en ce que**, dans l'étape de refroidissement, est réalisé un refroidissement progressif à pression réduite dans lequel le refroidissement progressif est réalisé alors que la pression d'un gaz de refroidissement qui couvre le corps intermédiaire est réduite afin d'être inférieure à la pression atmosphérique.

5. Procédé selon la revendication 4, **caractérisé en ce que** le refroidissement progressif à pression réduite est réalisé tout en agitant le gaz de refroidissement.

6. Procédé selon la revendication 4 ou 5, **caractérisé en ce que** le refroidissement progressif à pression réduite est réalisé au moins avant que la transformation de microstructure du corps intermédiaire ait commencé en raison du refroidissement jusqu'à ce que la transformation entière de microstructure soit terminée.

7. Procédé selon l'une quelconque des revendications 4 à 6, **caractérisé en ce que** l'état à pression réduite du gaz de refroidissement dans le refroidissement progressif à pression réduite est établi dans une plage de 0,1 bar à 0,65 bar.

8. Procédé selon la revendication 7, **caractérisée en ce que** l'état à pression réduite du gaz de refroidissement dans le refroidissement progressif à pression réduite est établi dans une plage de 0,1 bar à 0,3 bar.

9. Procédé selon l'une quelconque des revendications 4 à 8, **caractérisé en ce que**, dans l'étape de refroidissement, un refroidissement est réalisé dans la condition telle que la vitesse d'agitation du gaz de refroidissement est accrue une fois que la température du corps intermédiaire devient égale ou inférieure au point de transformation A1.

10. Procédé selon l'une quelconque des revendications 4 à 9, **caractérisé en ce que**, dans l'étape de refroidissement, un refroidissement est réalisé dans la condition telle que la pression du gaz de refroidissement est accrue une fois que la température du corps intermédiaire devient égale ou inférieure au point de transformation A1.

11. Procédé selon l'une quelconque des revendications 1 à 10, **caractérisé en ce que** l'étape de carburation est une étape de carburation à pression réduite dans laquelle le corps intermédiaire est soumis à un traitement de carburation dans un gaz de carburation sous une pression réduite.

12. Procédé selon la revendication 11, **caractérisé en ce que**, dans l'étape de carburation, le corps intermédiaire est chauffé à une température égale ou supérieure à une température d'austénitisation, dans la condition d'une pression réduite de 0,001 à 0,1 bar.

13. Procédé selon l'une quelconque des revendications 1 à 12, **caractérisé en ce que** la matière est un acier au carbone qui incorpore C : 0,20 à 0,45 pour cent, en pour cent en masse.

14. Procédé selon la revendication 13, **caractérisé en ce que**, dans l'étape de carburation, la densité de carburation maximum de la couche de carburation est C : 0,5 à 1,0 pour cent en masse.

15. Procédé selon l'une quelconque des revendications 1 à 14, **caractérisé en ce que** la vitesse de refroidissement de trempe à l'eau dans l'étape de trempe est 200° C/sec à 2000° C/sec.

16. Elément de poulie pour une transmission à variation continue du type à courroie, **caractérisé en ce que** l'élément de poulie est fabriqué par le procédé selon l'une quelconque des revendications 1 à 15.
